Europäisches Patentamt

European Patent Office

Office européen des brevets

(19)

(11) Veröffentlichungsnummer: **0 171 842**
**A1**

(12) # EUROPÄISCHE PATENTANMELDUNG

(21) Anmeldenummer: 85201163.4

(22) Anmeldetag: 10.07.85

(51) Int. Cl.⁴: **C 23 C 22/77**
**G 01 N 31/16**

(30) Priorität: 27.07.84 DE 3427729

(43) Veröffentlichungstag der Anmeldung:
19.02.86 Patentblatt 86/8

(84) Benannte Vertragsstaaten:
BE DE FR IT NL SE

(71) Anmelder: METALLGESELLSCHAFT AG
Reuterweg 14 Postfach 3724
D-6000 Frankfurt/M.1(DE)

(84) Benannte Vertragsstaaten:
DE IT NL SE

(71) Anmelder: Société Continentale Parker
51, Rue Pierre
F-92111 Clichy(FR)

(84) Benannte Vertragsstaaten:
BE FR

(72) Erfinder: Hauffe, Dieter
Wilhelm-Busch-Strasse 66
D-6000 Frankfurt am Main(DE)

(74) Vertreter: Rieger, Harald
Reuterweg 14
D-6000 Frankfurt a.M.(DE)

(54) Verfahren zur Aufrechterhaltung des Zinkgehaltes in Zinkphosphatierbädern.

(57) Bei einem Verfahren zur Aufrechterhaltung eines vorgegebenen Zinkgehaltes in nickelhaltigen Zinkphosphatierbädern, wird

a) bei einer Badprobe Nickel durch Zusatz von Dimethylglyoxim gefällt sowie eine lösliche Kupferkomplexverbindung zugesetzt und dann zur Bestimmung des Zinkgehaltes mit einer Maßlösung, die einen Komplexbildner für Zink und Kupfer enthält, gegen eine kupfersensitive Elektrode titriert. Anschließend wird

b) mit der auf diese Weise ermittelten Abweichung vom vorgegebenen Zinkgehalt (Sollwert) die automatische Dosierung von zinkhaltigem Ergänzungskonzentrat geregelt.

Besonders vorteilhaft ist es, zu einer Badprobe eine Komplexverbindung aus Kupfer-Ethylendiamintetraessigsäure mit einem Molverhältnis von 1 : 1, und zwar in einer Menge entsprechend dem 5- bis 15-fachen Molverhältnis (bezogen auf Cu: Zn) zuzusetzen. Zur Bestimmung des Zinkgehaltes wird mit einer Maßlösung titriert, die einen Komplexbilder enthält, der auch Bestandteil der zuvor zugegebenen Kupferkomplexverbindung ist, beispielsweise mit einer Maßlösung, die das Dinatriumsalz der Ethylendiamintetraessigsäure enthält. Das erfindungsgemäße Verfahren ist insbesondere für die Aufrechterhaltung des Zinkgehaltes bei Phosphatierbädern mit niedrigem Zinkgehalt geeignet.

./...

Fig.1

METALLGESELLSCHAFT AG

Prov. Nr. 9217 M

## Verfahren zur Aufrechterhaltung des Zinkgehaltes in Zinkphosphatierbädern

Die Erfindung betrifft ein Verfahren zur Aufrechterhaltung eines vorgegebenen Zinkgehaltes in nickelhaltigen Zinkphosphatierbädern, sowie die Anwendung dieses Verfahrens auf Phosphatierbäder mit geringem Zinkgehalt.

Beim praktischen Arbeiten mit Zinkphosphatierbädern zur chemischen Oberflächenbehandlung von Metallen werden Badkomponenten durch Schichtbildung, Schlammausfällung und mechanische Badverluste verbraucht. Diese Verluste werden durch Zusatz von entsprechend zusammengesetztem Phosphatergänzungskonzentrat zum Phosphatierbad wieder ausgeglichen. Zur Ermittlung des Chemikalienverbrauchs und der notwendigen Ergänzungsmenge wird die aktuelle Badkonzentration bestimmt und mit der Sollkonzentration verglichen.

Eine übliche Methode besteht darin, die Badkonzentration durch den Verbrauch an ml n/10 NaOH für die Titration einer 10 ml Badprobe gegen Phenolphthaleinindikator auszudrücken ("Gesamtsäurepunkte"). Eine weitere Kenngröße ist die elektrische Leitfähigkeit, die - ähnlich wie die Gesamtsäurepunkte - ebenfalls nur eine pauschale Aussage über die Gesamtkonzentration erlaubt.

Mit der Einführung der "Niedrigzink"-Phosphatierverfahren (DE-OS 22 32 067, DE-OS 31 01 866) erlangt die Bestimmung des Zinkgehaltes und seine Aufrechterhaltung in engen Grenzen besondere Bedeutung. Hierfür werden Titrierautomaten eingesetzt, die den Kationengehalt des Bades mit Hilfe der Komplexometrie unter kolorimetrischer Endpunktanzeige ermitteln und den so gewonnenen Meßwert für die Regelung der Badkonzentration verwenden. Da die Niedrigzink-Phosphatierbäder meist neben Zink noch Nickel enthalten, liefert dieses Analysenverfahren einen Meßwert, der um die Nickelkonzentration verfälscht ist.

- 2 -

Aufgabe der Erfindung ist es nun, ein Verfahren zur Aufrechterhaltung der Zinkkonzentration in nickelhaltigen Zinkphosphatierbädern bereitzustellen, das die Nachteile der bekannten Verfahren nicht aufweist, präzise arbeitet und mit keinem regeltechnischen Aufwand verbunden ist.

Die Aufgabe wird gelöst, indem das Verfahren der eingangs genannten Art entsprechend der Erfindung derart ausgestaltet wird, daß man

a) bei einer Badprobe Nickel durch Zusatz von Dimethylglyoxim fällt sowie eine lösliche Kupferkomplexverbindung zusetzt und dann zur Bestimmung des Zinkgehaltes mit einer Maßlösung, die einen Komplexbildner für Zink und Kupfer enthält, gegen eine kupfersensitive Elektrode titriert sowie

b) mit der auf diese Weise ermittelten Abweichung vom vorgegebenen Zinkgehalt (Sollwert) die automatische Dosierung von zinkhaltigem Ergänzungskonzentrat regelt.

Die Fällung des Nickels und die Titration werden vorzugsweise im schwach sauren Bereich, beispielsweise bei einem pH-Wert von ca. 5, ausgeführt. Die der Probe zuzugebende Menge an Dimethylglyoxim beträgt vorzugsweise etwa 4 Mol auf 1 Mol Ni, d.h. etwa 7 bis 8 Gewichtsteile Dimethylglyoxim auf 1 Gewichtsteil Ni. Die Reaktionszeit und Reaktionstemperatur in der Badprobe sind ohne wesentliche Bedeutung.

Die innerhalb des erfindungsgemäßen Verfahrens einzusetzende lösliche Kupferkomplexverbindung muß in der Badprobe in Gegenwart von Zink eine geringe Menge $Cu^{++}$ freisetzen.

Eine bevorzugte Ausgestaltung der Erfindung sieht vor, zu einer Badprobe eine Komplexverbindung aus Kupfer-Ethylendiamintetraessigsäure mit einem Molverhältnis von 1 : 1 zuzusetzen. Die als Komplexverbindung in die Probe eingebrachte Kupfermenge ist, ausgedrückt in Molarität, vorzugsweise höher als die Molarität des Zinkgehaltes.

Eine weitere vorteilhafte Ausführungsform der Erfindung besteht darin, zu einer Badprobe die Kupferkomplexverbindung in einer Menge entsprechend dem 5- bis 15-fachen Molverhältnis (bezogen auf Cu : Zn) zuzusetzen.

Die Zugabe des Dimethylglyoxims und der löslichen Kupferkomplexverbindung kann in zwei Schritten, aber auch gleichzeitig über eine Lösung erfolgen.

Es empfiehlt sich, zur Bestimmung des Zinkgehaltes mit einer Maßlösung zu titrieren, die den gleichen Komplexbildner enthält, der auch Bestandteil der zuvor zugesetzten Kupferkomplexverbindung ist. Hierdurch wird insbesondere vermieden, daß ggf. unübersehbare, das Ergebnis verfälschende Austauschreaktionen zwischen der zuvor zugegebenen und der bei der Titration entstehenden Komplexverbindungen auftreten.

Eine Weiterbildung der Erfindung besteht daher darin, zur Bestimmung des Zinkgehaltes mit einer Maßlösung zu titrieren, die einen Komplexbildner enthält, der auch Bestandteil der zuvor zugegebenen Kupferkomplexverbindung ist bzw. mit einer Maßlösung zu titrieren, die das Dinatriumsalz der Ethylendiamintetraessigsäure enthält.

Die Molarität der Maßlösung bestimmt sich im wesentlichen nach der Zinkkonzentration im Phosphatierbad.

In die zu titrierende Badprobe taucht eine kupfersensitive Elektrode, deren Potential gegen eine Vergleichselektrode, z.B. eine Kalomelelektrode, gemessen wird. Kupfersensitive Elektroden enthalten eine beispielsweise aus Kupfersulfid + Silbersulfid aufgebaute Membran und zeigen ein Potential an, das von der Konzentration an $Cu^{++}$ in der Badprobe abhängig ist. Der Endpunkt der Titration fällt mit dem Wendepunkt des von der Kupferelektrode angezeigten Potentials zusammen. Physikalisch ist dieser Wendepunkt dadurch zu erklären, daß mit dem Auftreten von freiem Komplexbildner in der austitrierten Probe ein scharfer Abfall der $Cu^{++}$-Konzentration parallel geht.

Der anhand dieser Methode ermittelte Zinkgehalt wird als Regelgröße für die automatische Dosierung des Phosphatergänzungskonzentrates zum Phosphatierbad verwendet.

Zusätzlich zur Bestimmung des Zinkgehaltes kann auch noch eine automatische Bestimmung der Gesamtsäurepunkte erfolgen. Mit diesen beiden Meßwerten kann ein Phosphatierbad unter Verwendung von zwei Ergänzungskonzentraten, das eine mit höherem Gewichtsverhältnis Zn zu $P_2O_5$ (z.B. 0,30), das andere mit geringerem Gewichtsverhältnis Zn zu $P_2O_5$ (z.B. 0,03), sehr gut auf konstanten Zn- und Gesamtsäuregehalt gefahren werden. Die Art der Ergänzung erfolgt dann nach dem Schema der Tabelle 1.

Tabelle 1

| Regelgröße | | Ergänzung mit Phosphatkonzentrat mit | |
|---|---|---|---|
| Zn-Gehalt | Gesamtsäure-punkte | hohem Zn zu $P_2O_5$ | niedrigem Zn zu $P_2O_5$ |
| zu niedrig | im Sollbereich | ja | nein |
| zu niedrig | zu niedrig | nein | ja |

Die automatische Ergänzung weiterer Badkomponenten, z.B. von $NaNO_2$ erfolgt nach den bekannten Methoden.

Die Phosphatierbäder, auf die das erfindungsgemäße Verfahren angewandt werden kann, können Zink, Nickel und Phosphat in weiten Mengenbereichen enthalten und beispielsweise folgende Konzentrationen aufweisen:

$$0,2 \ldots 2,5 \text{ g/l Zn}$$
$$0,2 \ldots 2,5 \text{ g/l Ni}$$
$$5 \ldots 20 \quad \text{g/l } P_2O_5$$

Wegen seiner hohen Meßgenauigkeit ist das erfindungsgemäße Verfahren von besonderem Vorteil für Bäder mit $0,2 \ldots 1,5$ vorzugsweise bis $1,0$ g/l Zn und $0,2 \ldots 1,5$ g/l Ni. In diesem Fall wird man zweckmäßigerweise mit einer 0,01 m Maßlösung, insbesondere des Dinatriumsalzes von Ethylendiamintetraessigsäure arbeiten. 1 ml dieser Maßlösung entspricht dann 0,65 mg Zn.

Neben den genannten Komponenten können noch die in der Phosphatiertechnik üblichen Zusätze zur Beschleunigung, Oxidation, Aktivierung und Schichtmodifikation anwesend sein.

Das erfindungsgemäße Verfahren wird anhand der folgenden Beispiele beispielsweise und näher erläutert:

Beispiel 1

Zur Ermittlung des Einflusses der Zinkkonzentration wurden Phosphatierbadproben mit $0,5$ g/l Ni, $15$ g/l $P_2O_5$ und Zn-Gehalten von $0,3$; $0,4$; $0,5$; $0,6$ und $0,7$ g/l hergestellt. Das Verhältnis von freiem $P_2O_5$ zu Gesamt-$P_2O_5$ wurde auf $0,08$ eingestellt.

Ferner wurde ein Reagenz A aus

| | | |
|---|---|---|
| 0,017 | Mol/l | Dimethylglyoxim |
| 0,085 | Mol/l | Cu als 1 : 1 Komplex mit Ethylendiamintetra-essigsäure |
| 0,34 | Mol/l | Natriumacetat |
| 0,085 | Mol/l | Essigsäure |
| | | in einem 2 : 1 Wasser/Ethanol-Gemisch |

angesetzt. Der pH-Wert dieses Reagenzes betrug etwa 5,1.

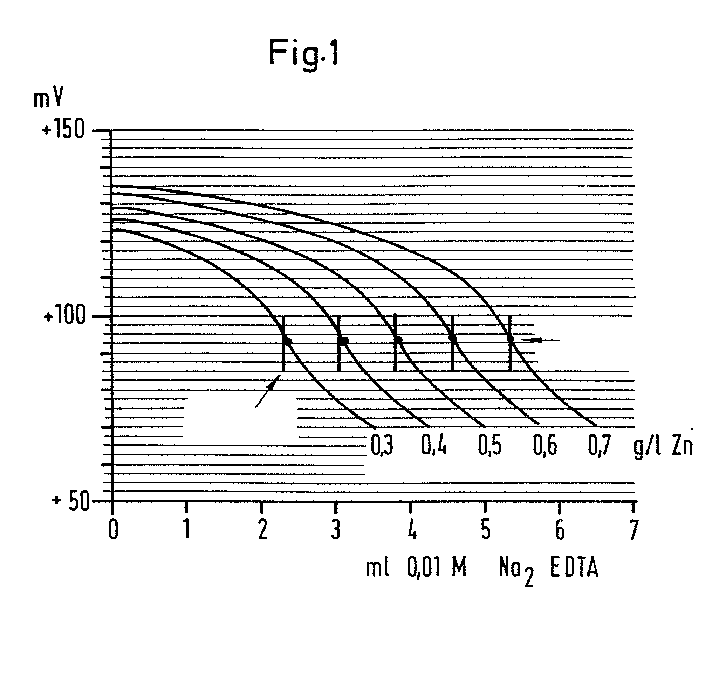

5 ml Phosphatbadprobe wurden mit ca. 10 ml Reagenz A versetzt und mit destilliertem Wasser auf 100 ml verdünnt. Nach 4 min Reaktionszeit wurde die Probe bei Raumtemperatur gegen eine kupfersensitive Elektrode mit 0,01 m Dinatriumsalz der Ethylendiamintetraessigsäure ($Na_2$EDTA) titriert. Der Potentialverlauf ist in Fig. 1 dargestellt. Auf der Abszisse ist der Verbrauch an 0,01 m Maßlösung, auf der Ordinate das Potential der Cu-Elektrode in mV dargestellt.

Man sieht, daß die praktisch gefundenen, durch • gekennzeichneten Wendepunkte gut mit den theoretischen, durch einen senkrechten Strich gekennzeichneten Verbrauchswerten für die Maßlösung übereinstimmten.

Beispiel 2

Zur Ermittlung des Einflusses der Nickelkonzentration wurden Phosphatierbadproben mit 0,5 g/l Zn, 15 g/l $P_2O_5$ und Ni-Gehalten von 0,3; 0,5 und 0,7 g/l hergestellt. Das Verhältnis von freiem $P_2O_5$ zu Gesamt-$P_2O_5$ wurde auf 0,08 eingestellt.

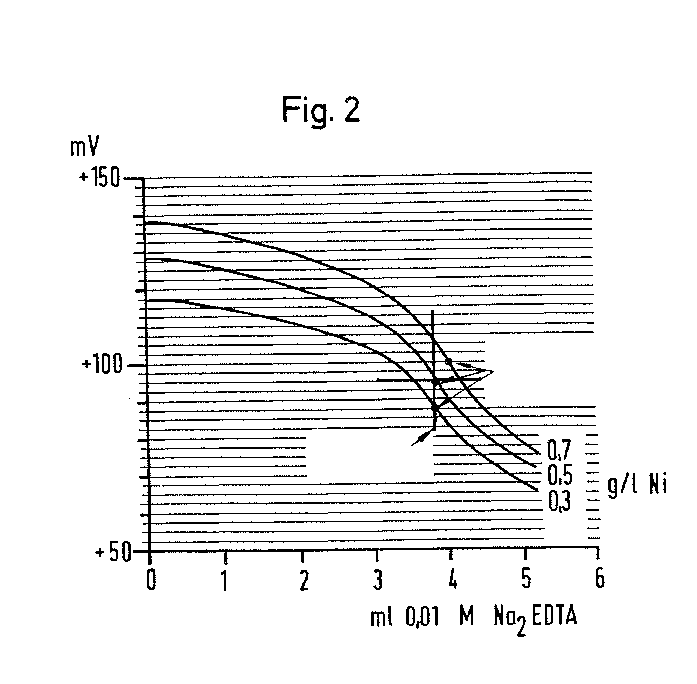

Wie im Beispiel 1 wurden 5 ml Badprobe mit ca. 10 ml Reagenz A versetzt und mit destilliertem Wasser auf 100 ml verdünnt. Die Titrationsergebnisse sind in Fig. 2 dargestellt. Auch hier fallen die theoretisch zu erwartenden und die tatsächlich gefundenen Verbrauchswerte an Maßlösung eng zusammen und sind von der Nickelkonzentration praktisch unabhängig.

Patentansprüche

1. Verfahren zur Aufrechterhaltung eines vorgegebenen Zinkgehaltes in nickelhaltigen Zinkphosphatierbädern, dadurch gekennzeichnet, daß man

   a) bei einer Badprobe Nickel durch Zusatz von Dimethylglyoxim fällt sowie eine lösliche Kupferkomplexverbindung zusetzt und dann zur Bestimmung des Zinkgehaltes mit einer Maßlösung, die einen Komplexbildner für Zink und Kupfer enthält, gegen eine kupfersensitive Elektrode titriert sowie

   b) mit der auf diese Weise ermittelten Abweichung vom vorgegebenen Zinkgehalt (Sollwert) die automatische Dosierung von zinkhaltigem Ergänzungskonzentrat regelt.

2. Verfahren nach Anspruch 1, dadurch gekennzeichnet, daß man zu einer Badprobe eine Komplexverbindung aus Kupfer-Ethylendiamintetraessigsäure mit einem Molverhältnis von 1 : 1 zusetzt.

3. Verfahren nach Anspruch 1 oder 2, dadurch gekennzeichnet, daß man zu einer Badprobe die Kupferkomplexverbindung in einer Menge entsprechend dem 5- bis 15-fachen Molverhältnis (bezogen auf Cu : Zn) zusetzt.

4. Verfahren nach Anspruch 1, 2 oder 3, dadurch gekennzeichnet, daß man zur Bestimmung des Zinkgehaltes mit einer Maßlösung titriert, die einen Komplexbildner enthält, der auch Bestandteil der zuvor zugegebenen Kupferkomplexverbindung ist.

5. Verfahren nach Anspruch 4, dadurch gekennzeichnet, daß man mit einer Maßlösung titriert, die das Dinatriumsalz der Ethylendiamintetraessigsäure enthält.

6. Anwendung des Verfahrens nach einem oder mehreren der Ansprüche 1 bis 5 auf die Aufrechterhaltung des Zinkgehaltes bei Phosphatierbädern mit einem Zinkgehalt von 0,2 bis 1,5, vorzugsweise bis 1,0 g/l Zn.

# Fig.1

# Fig. 2

Europäisches
Patentamt

**0171842**

Nummer der Anmeldung

**EUROPÄISCHER RECHERCHENBERICHT**

EP  85 20 1163

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | PRODUCT FINISHING, Band 30, Juli 1977, Seiten 21-24, London, GB; R.D. WYVILL: "The use of ion selective electrodes in metal finishing" <br> * Seite 22, vor letzter Absatz - Seite 24, Zeile 37 * | 1,2,4-6 | C 23 C   22/77 <br> G 01 N   31/16 |
| A | A.I. VOGEL: "Quantitative inorganic analysis, 3er Ausgabe, 1961, Seiten 635-636, Longmans, Green & Co., London, GB <br> * Seite 636, Absätze e,f * | 1 | |
| A | JOURNAL OF INDIAN CHEMICAL SOCIETY, Band 59, November-Dezember 1982, Seiten 1352-1353; L. ILCHEVA et al.: "Determination of zinc with cupric ion-selective electrode and its analytical application in fertilizers" <br> * Seite 1352, Zeilen 1-25 * | 3 | **RECHERCHIERTE SACHGEBIETE (Int. Cl.4)** <br><br> C 23 C   22/00 <br> G 01 N   31/00 |
| A | FR-A-1 380 055 (SOCIETE CONTINENTALE PARKER) <br> * Patentansprüche * | 1-6 | |

Der vorliegende Recherchenbericht wurde für alle Patentansprüche erstellt.

| Recherchenort | Abschlußdatum der Recherche | Prüfer |
|---|---|---|
| DEN HAAG | 04-11-1985 | TORFS F.M.G. |